# EUROPEAN PATENT APPLICATION

(11) **EP 1 036 699 A1**
(43) Date of publication of application: **20.09.2000**
(21) Application number: 00200886.0
(22) Date of filing: 13.03.2000
(51) Int. Cl.: B60P 1/44

(54) **Hydraulic cylinder with multiple action, especially for the lifting tailgates of industrial vehicles**

(30) Priority: 16.03.1999 IT MI990530
(71) Applicant: Dautel Campisa S.r.l., 20030 Pallazzolo Milanese, Milano (IT)
(72) Inventor: Nelzi, Giampaolo, 20070 Appiano Gentile, Como (IT)
(74) Representative: Parisi, Luigi

(57) **Abstract**

A hydraulic cylinder with multiple action, especially for the lifting tailgates of industrial vehicles, comprising a body (CIL) closed by a bottom (FO) inside which slides a piston (PI), having a rod (AS) integral with the piston (PI), the bottom (F), moreover, having a chamber (CA) hydraulically connected to an internal area of the cylindrical body (CIL), in which between the chamber (CA) and the internal area of the cylindrical body (CIL), there are valve means to allow a passage of variable flows of a fluid from the chamber (CA) to the internal area of the cylindrical body (CIL) and vice-versa. In particular at least two different speeds are obtained with reference to the extension of the cylinder.

## Description

This invention refers to a hydraulic cylinder with multiple action, especially for the lifting tailgates of industrial vehicles.

It is known that hydraulic cylinders comprise a cylindrical body, in which slides a piston integral with a rod, closed by means of a bottom. In the bottom is a chamber for feeding fluid under pressure, generally oil, connected to the inside of the cylindrical body by means of a through hole.

The pressurised oil entering the feeding chamber is fed, by mean of the through hole, into the cylindrical body to allow movement of the piston and, therefore, of the rod integral with it.

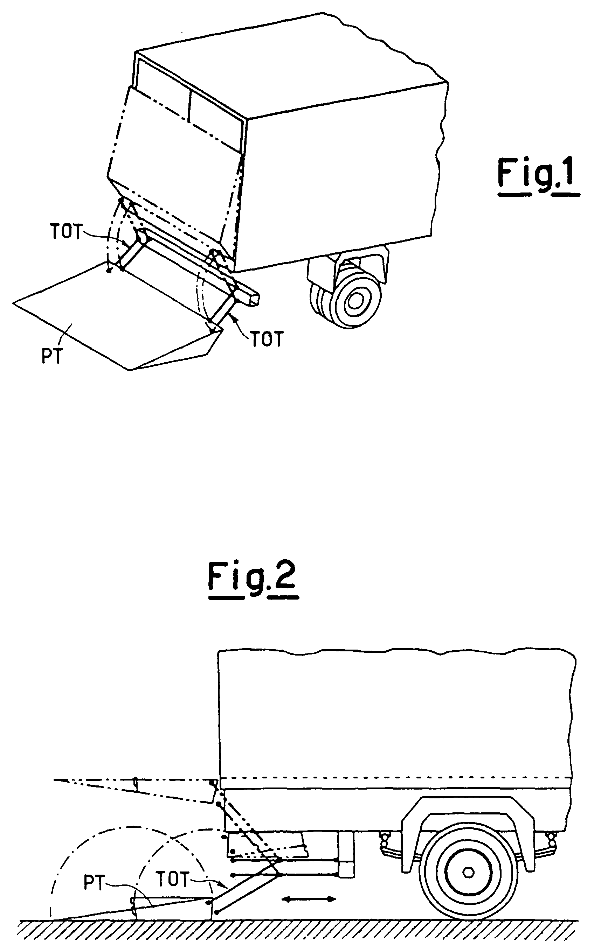

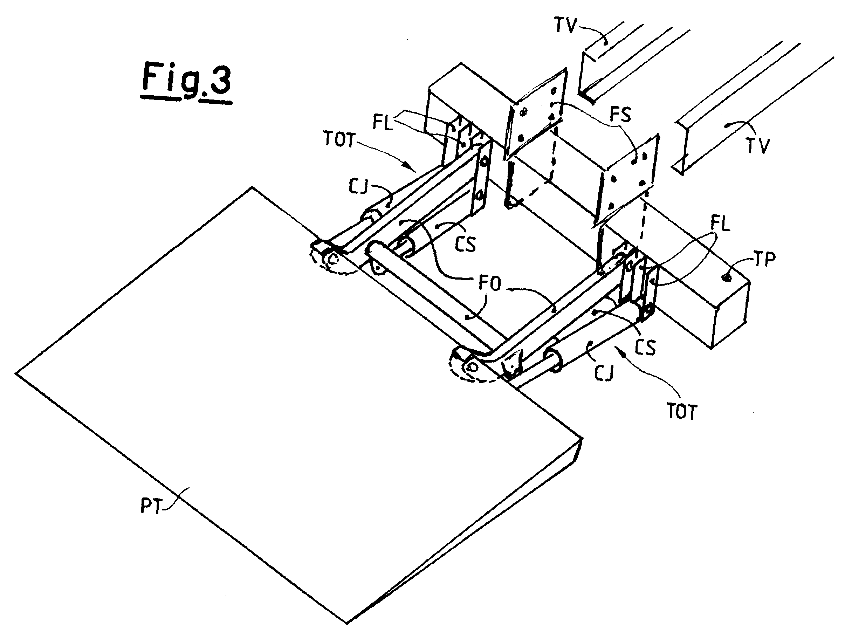

To show clearly the technical problems concerning hydraulic cylinders, in particular for lifting tailgates, a brief description of the traditional lifting tailgates is given below, referring to figures 1 to 4.

The lifting tailgates of industrial vehicles consist of a platform PT articulated on a fork FO which, in turn, is articulated on flanges FL which are part of a bearing tube TP. Hanging flanges FS are applied on the bearing tube TP to allow the tailgate to be suspended from the vehicle chassis TV. The platform PT goes up and down, maintaining a horizontal position because under the fork FO are articulated two hydraulic tilting cylinders CJ which determine two quadrilaterals articulated on identical facing sides. Two lifting cylinders CS push up the platform PT to lift it and brake its descent.

Traditional lifting tailgates are divided into two main groups: vertical tailgates (figure 1), in which the platform is vertically closed during transport, and retractable tailgates (figure 2) in which the platform is folded, generally once or twice, and the whole assembly is drawn back under the rear overhang of the industrial vehicle during transport.

Two bottom arms of the quadrilaterals are generally composed of two hydraulic cylinders CJ which keep the length fixed and equal to that of the arm above during lifting and lowering of the platform; in this way the platform PT always remains horizontal because the two facing sides of the quadrilateral are of the same length. Instead, when they make contact with the ground, the two bottom cylinders CJ are shortened so as to obtain tilting of the tip of the platform PT towards the ground.

For tailgates of the vertical type, this last operation implies the need to pull back the rod of the hydraulic cylinders CJ, at a substantially reduced speed in comparison with the speed at which the platform PT is opened from its vertical travelling position to horizontal working position.

This happens because the contact between the tip of the platform PT and the ground comes about with extremely varied loads, for example rotating loads, unbalanced and unstable loads, high loads. If the tip of the platform PT touches the ground too quickly, these may fall from the platform PT and be damaged, as well as endangering anyone in the vicinity.

These practical necessities are acquired and regulated in the European standards which require a maximum opening speed of 10° per second, while they require a maximum ground touching speed of 4° per second. Since the lifting tailgate may be used on roads with an upward or downward slope, and the platform PT must be kept absolutely horizontal, the bottom or "slow" speed of touching the ground at maximum 4° per second may require an inclination of about 10° above horizontal or about 10° below horizontal.

Of course it is unthinkable to use such a slow speed tilting speed of the platform PT also when opening it from its vertical travelling position to the horizontal working position, because the time taken would unreasonably long (in fact the standards allow a speed 2.5 times faster). To obtain gentle contact with the ground, while using cylinders which work at the higher speed, two systems are generally used.

The first system consists of lengthening the upper arm of the quadrilateral. This is achieved using a mechanical system which opens automatically on contact of the platform PT with the ground. The mechanical ratio of the joint allows it to touch the ground with a speed ratio of about 1:3 with respect to the opening speed of the platform PT.

The defect of this system is principally that of not supporting side loads on the platform PT, because these cause opening of the mechanical joint opposite the applied weight, even without the platform PT having touched the ground, with consequent damage to the structure and loss of load stability.

The second system, more widely used, consists of fitting in the hydraulic circuit a compensating cylinder COM, the main body of which is connected to the lifting cylinders CS, while the second body (of course with a smaller section, the bottom area minus the rod area) is connected to the tilting cylinders CJ. When the tailgate touches the ground, the hydraulic oil in the first body comes out, making the tilting cylinders CJ retract by taking into the second body of the compensating cylinder COM the quantity of oil corresponding to the retraction of the tilting cylinders CJ, thus causing tilting of the platform PT until it touches the ground.

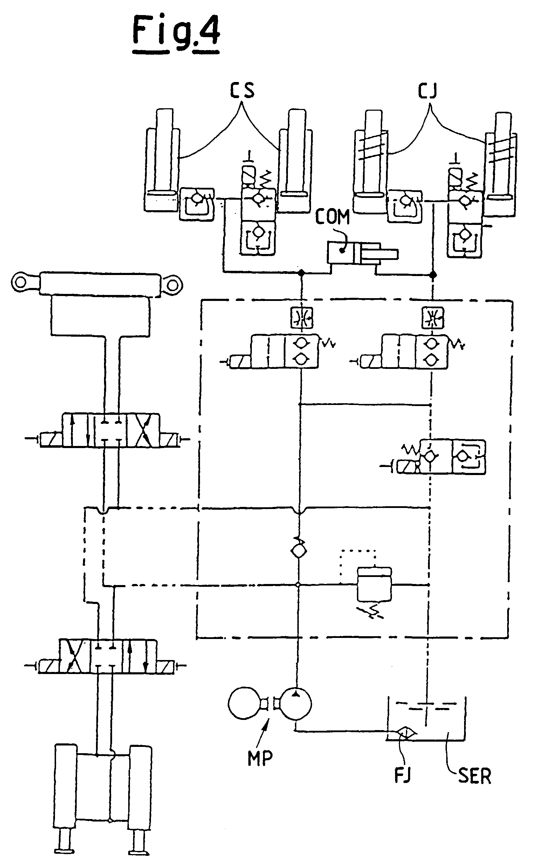

The defects of this system are mainly the cost, the considerable weight, the lack of reliability of the load on the platform is moved near to the end and, to avoid risks in this case, a safety electrovalve is added which causes further costs and complications. This system, moreover, has the further complication of the need for two separate lifting and tilting circuits. In particular, figure 4 shows a typical hydraulic diagram with a compensation cylinder COM.

The aim of this invention is to eliminate the technical problems encountered, realising a hydraulic cylinder with multiple action, in particular for the lifting tailgates of industrial vehicles, which enables several operating speeds - two in particular - of one of its rods.

Another aim of the invention is to realise a hydraulic cylinder with multiple action, in particular for the lifting tailgates of industrial vehicles, which is substantially simple, safe and reliable.

These and other aims, according to this invention, are achieved realising a hydraulic cylinder with multiple action, in particular for the lifting tailgates of industrial vehicles, according to claim 1.

Other characteristics of this invention are further defined in the following claims.

The advantage lies in the fact that the cylinder according to the invention allows a considerable simplification of the hydraulic circuit, when at least a double operating speed of its rod is required. This is achieved keeping the costs and the weight substantially low in comparison with the traditional realisations. Furthermore, the circuit in which the cylinder is inserted is substantially simple, safe and reliable.

Further characteristics and advantages of a hydraulic cylinder with multiple action, in particular for the lifting tailgates of industrial vehicles, according to this invention will be clear from the following description, supplied purely as an example without limitation, referring to the enclosed schematic drawings in which:
- figure 1 shows a perspective view of a traditional vertical tailgate;
- figure 2 shows a perspective view of a traditional retracting tailgate;
- figure 3 shows an enlarged perspective view of a traditional vertical tailgate;
- figure 4 shows a diagram of the hydraulic circuit of a traditional tailgate;

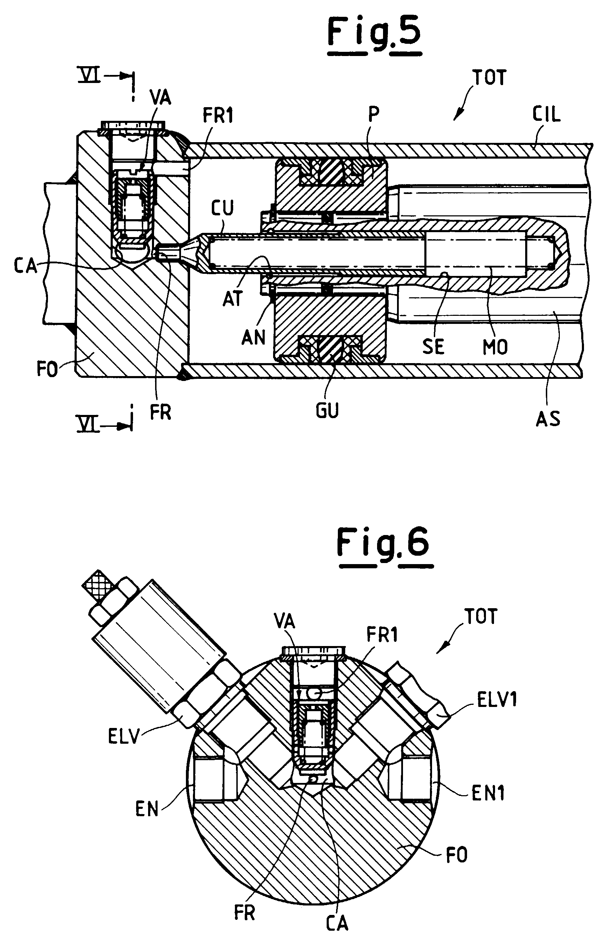

- figure 5 shows a section of a portion of the bottom of a cylinder according to the invention;
- figure 6 shows a section following the line VI-VI of figure 5;
- figure 7 shows a diagram of the hydraulic circuit of a tailgate fitted with cylinders according to the invention.

With reference to the figures from 5 to 7, a hydraulic cylinder with multiple action is shown, in particular for the lifting tailgates of industrial vehicles, indicated generally with the reference TOT.

The hydraulic cylinder TOT is composed of a cylindrical body CIL, closed at one end by a bottom FO, inside which slides a piston PI. The piston PI is associated by means of gaskets GU to the cylindrical body CIL and has a central through hole in which a rod AS is inserted and blocked with a ring AN. Between the piston PI and the rod AS, further sealing gaskets are inserted.

The rod AS has an axial, perfectly centred lengthways, in which one end of a spring MO is inserted. An opposite end of the spring MO, forming elastic means, as a cursor CU, as closing means for a through hole FR synchronised with the movement of the piston PI. The cursor CU is partly inserted and slides in the seat SE of the rod AS in which it is held in place by an anchoring means, for example a toric ring AT, and it faces the hole FR which is created in the centre of the bottom FO and follows the longitudinal axis of the same bottom FO. The cursor CU preferably has an enlarged rear portion sliding in contact with the internal walls of the seat SE, and a front portion integral with the rear portion, set at a distance from the internal walls of the seat SE.

An end portion of the cursor CU is suitable for fitting partly in the hole FR to close it, preventing the passage of oil through the hole from the inside of the body CIL to a chamber CA located in the bottom FO and vice-versa. This end portion is preferably shaped in the form of a truncated cone.

The bottom FO also has a second through hole FR1 putting the inside of the cylindrical body CIL in communication with the chamber CA. The holes FR and FR1 form valve means which hydraulically connect an internal area of the cylindrical body CIL with the chamber CA, to allow the passage of variable flow rates of a fluid or oil. Inside the chamber CA, between the mouths of the through holes FR and FR1, there is preferably a constant flow valve VA, of a known type, which allows the passage of a flow of oil in a constant quantity, regardless of the oil pressure.

The chamber CA is connected with oil feeding holes EN, preferably with interposed control electrovalves ELV. Specular holes EN1 may be created and second electrovalves ELV1 may be used, facing the first ELV for feeding the body CIL from opposite sides. The feeding holes EN lead to a portion of the chamber CA, limited by the valve VA, in which open the mouth of the hole FR and the mouth of the hole FR1.

The chamber CA is closed preferably by cap, to make at least the valve VA accessible to the operator.

The operation of the hydraulic cylinder with multiple action, especially for the lifting tailgates of industrial vehicles, according to the invention is substantially as follows.

Filling of the cylindrical body CIL to extract the rod AS from the cylindrical body CIL is obtained by putting an oil feeding circuit under pressure and opening the electrovalves ELV, if fitted. As the oil passes through the chamber CA and the holes FR, FR1, it is immersed inside the cylinder CIL. Depending on the power of the spring MO, on the section of the hole FR, on the more or less pointed shape of the cursor CU, the oil passage through the hole may be blocked or partly and/or progressively allowed.

This situation corresponds, for example, to a return phase from a position touching the ground of a platform of a tailgate with a horizontal position. By suitably regulating the spring MO, the shape of the cursor CU and the hole FR, contact with the ground may be made at a fast, slow or gradual speed.

Emptying of the cylindrical body CIL to pull back the rod AS is achieved by discharging the oil from the body CIL. This is achieved, for example, by opening the electrovalves ELV.

During a first phase the oil is discharged through both the holes FR and FR1, obtaining a first retraction speed.

When the cursor CU closes the hole FR, the oil can continue to come out from inside the body CIL only through the hole FR1. The hole FR1 discharges the oil into the chamber CA in a position in which it must pass through the constant flow valve VA to arrive at the mouths EN and then be discharged from the cylinder TOT. All this causes retraction of the rod AS at a second speed, lower than the first and irrespective of the load that the rod AS has to bear.

This situation corresponds, for example, to a phase of moving from a horizontal platform position to a position touching the ground. Closing of the hole FR by the cursor CU takes place preferably when the platform reaches a position (inclination) of about 10° positive. When this occurs the cylinders make the platform touch the ground at a speed that is more or less identical, whether the platform is empty or loaded.

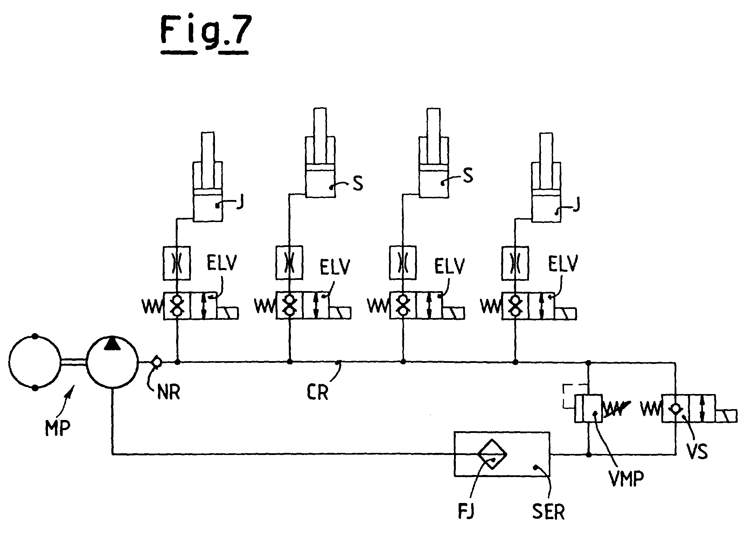

Figure 7 shows an example of embodiment of a feeding circuit for tailgates, the management of which is considerably simplified thanks to the use of this invention.

A motor-driven pump MP (or any actuator) sends hydraulic oil into the circuit, sucking it up from a tank SER through a filter FJ. The pressurised oil is sent into a hydraulic circuit CR through a non-return valve NR and distributed to one or more lifting cylinders S and/or tilting cylinders J, preferably by means of the double seal electrovalves ELV, while preferably one discharge electrovalve VS remains closed.

Preferably near the discharge electrovalve VS there is a safety valve for maximum pressure VMP. During lifting of the platform, the motor-driven pump MP supplies pressurised oil which enters the circuit CR through the non-return valve NR. The electrovalves ELV of the lifting cylinders S are opened while the discharge electrovalve VS remains closed.

To close the platform, the electrovalves ELV of the tilting cylinders J are opened instead of those of the lifting cylinders S.

To open the platform, the electrovalves ELV of the tilting cylinders J and the discharge electrovalve VS are opened.

To bring down the platform the electrovalves ELV of the lifting cylinders S and the discharge electrovalve VS are opened.

In this version the circuit CR may have a discharge valve VS also preceded or followed by a constant flow valve.

Moreover, in the same circuit CR there may be other hydraulic pressure outlets for other services.

A special characteristic of the hydraulic distribution system is that it has a loop circuit CR. The oil pumped in is sent into the circuit CR and is discharged into the tank SER preferably by opening the electrovalve VS; consequently the discharge into the tank SER takes place with the oil passing through the circuit CR on the opposite side of the motor. This fact is very important in comparison with normal circuits, in which the discharge valve is in a hydraulic block at the output of the motor-driven pump together with the non-return valve NR, as shown for example in figure 4.

If there is a foreign body in the hydraulic oil, in traditional circuits it goes backwards and forwards in the circuit, with the risk of blocking the valves.

In the circuit described, on the other hand, blocking is almost excluded because the backwards-forwards path of the oil is limited to only a small part of the residual oil in the cylinders, while nearly all the oil is discharged through the discharge electrovalve VS into the tank SER on the opposite side from the entry of the pressurised oil P, and this part of the oil is filtered again each time before being sent back into the circuit.

From the description given, the characteristics of the hydraulic cylinder with multiple action, especially for the lifting tailgates of industrial vehicles to which this invention refers, may be clearly seen, just as the advantages are clear.

In particular, these advantages are represented by the double speed of the cylinder rod which allows the creation of hydraulic circuits that are simple, safe and lightweight.

It is clear that numerous other variations may be made to the hydraulic cylinder to which this invention refers, without for this reason departing from the inherent principles of innovation of the inventive idea, and it is clear that, in the practical use of the invention, the materials, forms and dimensions of the details illustrated may be whatever required and they may be replaced with others that are technically equivalent.

## Claims

1. A hydraulic cylinder with multiple action, especially for the lifting tailgates of industrial vehicles, comprising a body (CIL) closed by a bottom (FO) inside which slides at least one piston (PI), having at least one rod (AS) integral with said piston (PI), said bottom (FO), moreover, having at least one chamber (CA) hydraulically connected to an internal area of said cylindrical body (CIL), characterised by the fact that it comprises valve means (FR, FR1), inserted between said chamber (CA) and said internal area of said cylindrical body (CIL) for allowing the passage of variable flows of a liquid from said chamber (CA) to said internal area to said cylindrical body (CIL) and vice-versa.

2. Hydraulic cylinder according to claim 1, wherein said valve means comprise at least one first through hole (FR) and at least one second through hole (FR1), it being possible to close at least said first hole (FR) by closing means (CU) controlled in a synchronised manner with the movement of said piston (PI).

3. Hydraulic cylinder according to claim 2, wherein said closing means comprise at least one cursor (CU) facing said first hole (FR), said cursor (CU) sliding at least in one seat (SE) of said rod (AS), elastic means (MO) being inserted between said cursor (CU) and said seat (SE)

4. Hydraulic cylinder according to claim 3, characterized in that said first and said second hole (FR, FR1) lead into a chamber (CA), said chamber (CA) being connected with at least one feeding hole (EN) for said oil, with or without an electrovalve (ELV) which blocks the flow, with or without an electrovalve opposite it.

5. Hydraulic cylinder according to claim 4, characterized in that inside said chamber (CA) there is at least one constant flow valve (VA), said valve (VA) being placed between the port of said second through hole (FR1) and said feeding hole (EN).

6. Hydraulic cylinder according to claim 5, characterized in that said at least one feeding hole (EN) leads into a portion of said chamber (CA) limited by said valve (VA) in which a port of at least one said hole (FR) opens.

7. Hydraulic cylinder according to claim 6, wherein between said at least one feeding hole (EN) and said chamber (CA) there is at least one control electrovalve (ELV).

8. Hydraulic cylinder according to claim 2, characterized in that said first hole (FR) may be composed of a constant flow valve.

9. Hydraulic cylinder according to claim 3, characterized in that said cursor (CU) has at least one enlarged rear portion inserted and sliding in contact with the internal walls of said seat (SE), and at least one front portion sliding in the seat (SE) but at a distance from said walls thereof and it is prevented from sliding by a toric ring (AT).

10. Hydraulic cylinder according to claim 3, characterized in that at least one end portion of said cursor (CU) is substantially shaped in the form of a truncated cone.

11. Hydraulic cylinder according to claims 2 and 10, characterized in that said cursor (CU) has a long pointed shape and its gradual entry or exit from the first hole (FR), during operation of the cylinder, causes progressive reduction of the passage of liquid, consequently producing a gradual speed.

12. Hydraulic cylinder according to claim 1, characterized in that it is assembled for operation of a lifting tailgate on industrial vehicles.
